# FASCICULE DE BREVET EUROPEEN

(11) **EP 3 090 182 B1**
(45) Date de publication et mention de la délivrance du brevet: **14.03.2018**
(21) Numéro de dépôt: 14827512.6
(22) Date de dépôt: 16.12.2014
(51) Int. Cl.: F04C 15/00, F16J 15/00

(54) **SYSTÈME HYDRAULIQUE À CARTER DRAINE**
HYDRAULISCHES SYSTEM MIT ABFLUSSGEHÄUSE
HYDRAULIC SYSTEM WITH A DRAIN HOUSING

(30) Priorité: 17.12.2013 FR 1362756
(43) Date de publication de la demande: 09.11.2016
(73) Titulaire: Poclain Hydraulics Industrie, 60410 Verberie (FR)
(72) Inventeur: VIDAL, Stéphane, F-60126 Longueil Sainte Marie (FR); MULOT, Jérémie, F-60510 Le Fay Saint Quentin (FR); DEPIERRE, Géry, F-60610 Lacroix Saint Ouen (FR)
(74) Mandataire: Intès, Didier Gérard André
(86) Numéro de dépôt international: PCT/FR2014/053355
(87) Numéro de publication internationale: WO 2015/092255

(56) Documents cités:
- FR-A1- 2 967 228
- GB-A- 1 448 530
- US-A- 4 382 756
- US-A- 5 007 276

## Description

La présente invention concerne un système hydraulique comprenant un carter dans lequel est disposé un appareil hydraulique, un arbre engagé dans le carter et un dispositif d'étanchéité entre l'arbre et le carter, le dispositif d'étanchéité comprenant un premier et un deuxième élément d'étanchéité successivement disposés sur l'arbre en ménageant entre eux une chambre de décharge reliée à un drain, le premier élément d'étanchéité étant situé entre la chambre de décharge et l'espace intérieur du carter.

On connait un système de ce type par la demande de brevet FR 2 967 228 au nom de la Demanderesse. Comme indiqué dans cette précédente demande, la présence du premier élément d'étanchéité permet de protéger le deuxième élément d'étanchéité contre les pics de pression pouvant survenir dans l'espace intérieur du carter. La chambre de décharge sert d'espace tampon, en particulier pour recueillir le fluide provenant de fuites au niveau du premier élément d'étanchéité, ces fuites survenant à l'occasion de tels pics de pression. La liaison de la chambre de décharge à un drain permet d'éviter les élévations de pression dans cette chambre et d'améliorer ainsi encore la protection du deuxième élément d'étanchéité.

Par exemple, l'appareil hydraulique peut comprendre un bloc-cylindres, une came et un distributeur, de telle sorte que, considéré avec le carter, il forme un moteur hydraulique. Pour la désactivation de ce moteur hydraulique, les pistons montés coulissants dans les cylindres du bloc-cylindres peuvent être rétractés dans ce dernier pour cesser d'être en contact avec la came, opérant ainsi ce que l'on nomme un décrabotage du moteur. Ce décrabotage peut être aidé ou provoqué par la mise en pression de l'espace intérieur du carter. Cependant, lorsqu'on souhaite réactiver le moteur, et donc faire ressortir les pistons de leurs cylindres pour les remettre en contact avec la came, opérant ainsi ce que l'on nomme un crabotage du moteur, la pression dans l'espace intérieur peut augmenter brutalement du fait de la sortie des pistons, provoquant ainsi un pic de pression.

Comme indiqué, la présence de deux éléments d'étanchéité, entre lesquels est disposée une chambre de décharge reliée à un drain, permet d'assurer une étanchéité durable et fiable malgré ces pics de pression. Par ailleurs, pour évacuer le fluide présent dans l'espace intérieur du carter, un drain de balayage est également nécessaire. Ainsi, le drain de la chambre de décharge et le drain de balayage doivent tous deux être réalisés, en général en passant par un élément de stator. Ces multiples perçages génèrent des coûts. De plus, lorsque l'arbre qui est engagé dans le carter est un élément de stator, les drains passent en général par cet arbre qui peut s'en trouver fragilisé, d'autant que des conduits éventuellement nécessaires à l'alimentation et à l'échappement de l'appareil hydraulique doivent souvent également être prévus dans le même arbre.

Un autre exemple d'appareil hydraulique est un frein hydraulique utilisant des disques de freinage ou analogue, constamment rappelés en contact de freinage, mais pouvant être écartés pour empêcher le freinage par une pression de fluide hydraulique. De même, dans ce type d'appareil, des pics de pression peuvent se produire, par exemple au moment de l'injection du fluide visant à écarter les disques pour faire cesser un freinage en cours. De même, avec cet autre type d'appareil, un drain de balayage doit être prévu en plus du drain de la chambre de décharge, pour permettre l'évacuation du fluide présent dans l'espace intérieur du carter.

De manière générale, dans un appareil du type précité, le balayage de l'espace intérieur du carter permet un certain renouvellement du fluide hydraulique contenu dans le carter, par exemple pour éviter son échauffement au cours d'un fonctionnement prolongé de l'appareil. Le débit de balayage nécessaire est déterminé en fonction de l'usage de l'appareil.

L'invention vise à simplifier le système connu, à chambre de décharge et drain, en permettant d'assurer le balayage de l'espace intérieur du carter de manière fiable, sans pour autant avoir recours à un drain de balayage spécifique.

Ce but est atteint grâce au fait que le système hydraulique présente, entre la chambre de décharge et l'espace intérieur du carter, un conduit de communication dans lequel est disposé un gicleur calibré.

Ainsi, le conduit de communication, associé au drain auquel est reliée la chambre de décharge, permet d'assurer l'évacuation du fluide contenu dans l'espace intérieur du carter, jouant ainsi le rôle d'un drain de balayage. Malgré la présence du premier élément d'étanchéité, on organise ainsi une fuite permanente entre l'espace intérieur du carter et la chambre de décharge. Toutefois, pour que le premier élément d'étanchéité joue pleinement son rôle de protection du deuxième élément d'étanchéité contre les pics de pression, le conduit de communication est équipé d'un gicleur calibré. Ce gicleur calibré permet de déterminer avec précision la perte de charge entre l'espace intérieur du carter et la chambre de décharge, de sorte que les pics de pression se produisant dans l'espace intérieur du carter ne provoquent pas, dans la chambre de décharge, une augmentation de la pression de nature à endommager le deuxième élément d'étanchéité. Ainsi, le premier élément d'étanchéité continue de jouer pleinement son rôle de protection du deuxième élément d'étanchéité. D'autre part, la section du gicleur calibré est déterminée pour que celui-ci puisse permettre l'évacuation du fluide contenu dans l'espace intérieur du carter selon un débit adapté pour assurer un balayage efficace.

Le choix d'un gicleur calibré permet également de réaliser un contrôle en pression du carter, tandis qu'un balayage a lieu.

Il peut être envisagé de disposer le gicleur calibré à distance de l'arbre, de manière à éviter les risques d'encrassement de ce gicleur. Ces risques sont par exemple dus à d'éventuelles poussières d'usure, dues au frottement de l'arbre avec les différents éléments qui coopèrent avec lui.

Selon un mode de réalisation, le drain présente une section de passage supérieure à la section du gicleur calibré, de préférence supérieure d'au moins 30 % à la section du gicleur calibré.

Ayant une section de passage supérieure à celle du gicleur calibré, le drain joue efficacement son rôle d'évacuation du fluide présent dans la chambre de décharge, pour éviter ainsi toute surpression dans cette dernière.

Selon un mode de réalisation, le premier élément d'étanchéité comprend un joint d'étanchéité et un support de joint fixé au carter.

Dans ce cas, on peut choisir que le gicleur calibré soit disposé dans un perçage du support de joint.

Le support de joint est une pièce facile à usiner, soumise à relativement peu de contraintes. En conséquence, la présence du perçage dans cette pièce n'en affecte pas considérablement la résistance mécanique. Par ailleurs, le gicleur peut ainsi être disposé sans affecter l'encombrement de l'ensemble, et par des opérations de montage simples, opérées sur une pièce dont la manipulation est aisée.

Par ailleurs, lorsque l'appareil hydraulique comporte un rotor, le support de joint peut être lui-même solidaire en rotation de ce rotor. Ainsi, la rotation du gicleur calibré situé dans le support du joint permet d'opérer un balayage efficace de l'ensemble de la chambre de décharge, évitant toute élévation de température dans cette dernière.

Selon une caractéristique envisageable, le perçage est incliné par rapport à la direction axiale de l'arbre.

Comme on le verra dans la suite, l'inclinaison du perçage peut être choisie pour faire en sorte que le fluide sortant du conduit de communication n'impacte pas le deuxième élément d'étanchéité. Par ailleurs, cette inclinaison peut être choisie pour éviter les risques de stagnation du fluide dans la chambre de décharge, pour éviter ainsi une élévation de la température du fluide dans cette dernière.

Le perçage est par exemple incliné de telle sorte que son extrémité située du côté de la chambre de décharge soit plus proche de l'arbre que son extrémité située du côté de l'espace intérieur du carter.

Cette inclinaison s'avère particulièrement intéressante lorsque l'appareil hydraulique comprend une partie de rotor, les forces centrifuges ayant tendance à amener le fluide à tourbillonner dans la chambre de décharge.

Selon une option, le support de joint présente une surface de portée pour le deuxième élément d'étanchéité.

Dans ce cas, le support de joint sert également à caler le deuxième élément d'étanchéité.

Selon un mode de réalisation, le système comporte une bague de frottement, montée serrée sur l'arbre et présentant une piste externe avec laquelle coopère au moins l'un des éléments d'étanchéité, de préférence le premier élément d'étanchéité, et la bague de frottement présente un perçage qui forme une partie du drain.

La piste externe de la bague de frottement forme une surface d'étanchéité appropriée pour le ou les éléments d'étanchéité avec lesquels elle coopère.

Il est également possible que la bague de frottement forme également une bague de support pour un palier de support de la rotation relative entre l'arbre et le carter.

Cependant, selon un autre mode de réalisation, une telle bague de frottement n'est pas prévue et les deux éléments d'étanchéité coopèrent directement avec l'arbre, dont la surface forme une surface d'étanchéité.

Selon un mode de réalisation, l'arbre présente seulement deux conduits en connexion fluidique avec l'espace intérieur du carter, à savoir un conduit axial d'amenée de fluide vers l'espace intérieur du carter et un conduit axial d'évacuation qui forme une partie du drain.

Par « conduit en connexion fluidique », on entend un conduit dont la fonction est d'assurer la circulation de fluide entre l'espace intérieur du carter et un autre espace (par exemple un réservoir sans surpression ou une source de pression).

Les usinages de l'arbre sont simplifiés par rapport à l'art antérieur dans lequel la présence d'un drain spécifique au balayage était également nécessaire, de sorte que trois conduits en connexion fluidique avec l'espace intérieur du carter étaient présents. L'arbre est donc moins fragilisé.

Selon un mode de réalisation, l'appareil hydraulique comprend un bloc-cylindres, une came et un distributeur de fluide.

Dans ce cas, considéré avec le carter, cet appareil forme un moteur hydraulique. Il s'agit en particulier d'un moteur à pistons radiaux et à fort couple de sortie utile, par exemple, à l'entraînement de la roue d'un véhicule. Les conduits d'alimentation et d'échappement de ce moteur, de même que les conduits servant éventuellement à la commande d'un changement de cylindrée du moteur, ne sont alors pas des conduits de connexion fluidique au sens de la définition donnée plus haut.

Selon un mode de réalisation, le gicleur est orienté de manière à ne pas diriger son jet de sortie dans la chambre de décharge vers le deuxième élément d'étanchéité.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue en coupe axiale d'un système hydraulique selon l'invention ;
- la figure 2 est une vue agrandie de la zone II de la figure 1, plus particulièrement concernée par l'invention ;
- la figure 3 est une vue analogue à la figure 2, illustrant une variante, lors de l'assemblage du système ;
- la figure 4 est une vue analogue à la figure 1, montrant une variante de réalisation ; et
- la figure 5 est une vue analogue à la figure 2, montrant une autre variante.

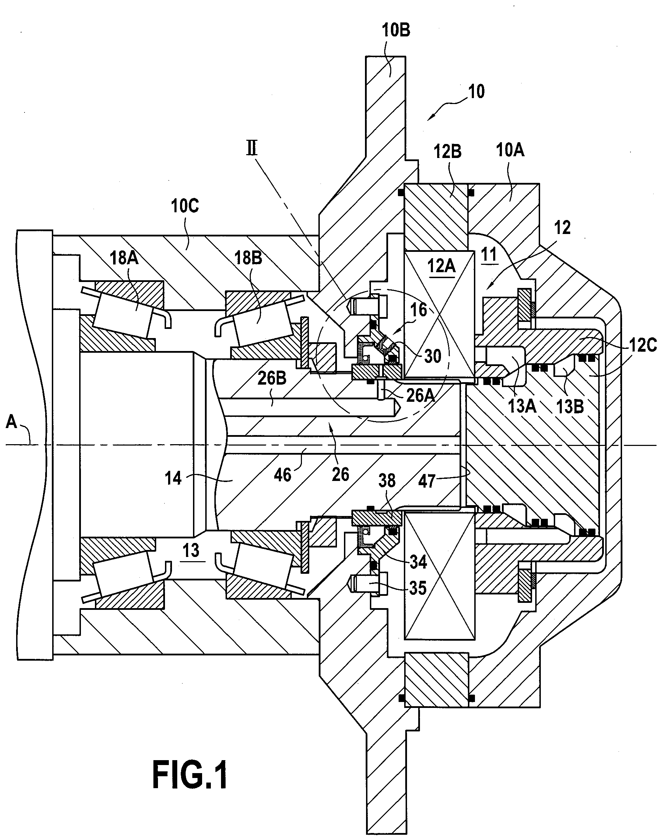

La figure 1 montre un système hydraulique comprenant un carter 10 dans lequel est disposé un appareil hydraulique 12, un arbre 14 engagé dans le carter et un dispositif d'étanchéité 16 entre l'arbre et le carter. En l'occurrence, l'appareil hydraulique 12 comprend un bloc-cylindres 12A, une came 12B et un distributeur de fluide 12C. Il s'agit donc, avec le carter, d'un moteur hydraulique ou d'une pompe. Cela peut être en particulier un moteur hydraulique à pistons radiaux. De manière connue en soi, les cylindres du bloc-cylindres sont alimentés en fluide à partir d'un fluide distribué par le distributeur, via des gorges, dont certaines sont représentées et désignées par les références 13A et 13B. Le distributeur est lui-même relié à des conduits principaux d'alimentation et fluide d'échappement de fluide, non représentés. En particulier, cet appareil peut être du type à bloc-cylindres fixe et à carter tournant, auquel cas les conduits d'alimentation et d'échappement passent avantageusement par l'arbre 14.

La came 12B forme une partie du carter 10, qui comprend également une partie 10A situé autour du distributeur 12C, et une partie 10B formant par exemple une bride pour la connexion avec un organe entraîné par le moteur, par exemple le moyeu d'une roue. Du côté opposé à l'appareil hydraulique 12, le carter est prolongé par une partie 10C, qui peut par exemple être engagée dans le moyeu d'une roue. Le carter et l'arbre 14 sont montés en rotation relative. Pour cette raison, ils coopèrent l'un avec l'autre via des paliers 18A et 18B, logés en l'espèce dans la partie 10C du carter. De manière connue, ces paliers peuvent être des paliers à roulements coniques. Comme indiqué précédemment, le système peut servir à l'entraînement d'un organe tel qu'une roue, auquel cas l'arbre peut être la fusée d'une roue. Comme on le voit sur la figure 1, l'arbre est solidaire en rotation avec le bloc-cylindres 12A, via des cannelures, de manière connue en soi. Ainsi, l'arbre et le bloc-cylindres sont en l'espèce deux éléments de stator, tandis que le carter est un élément de rotor.

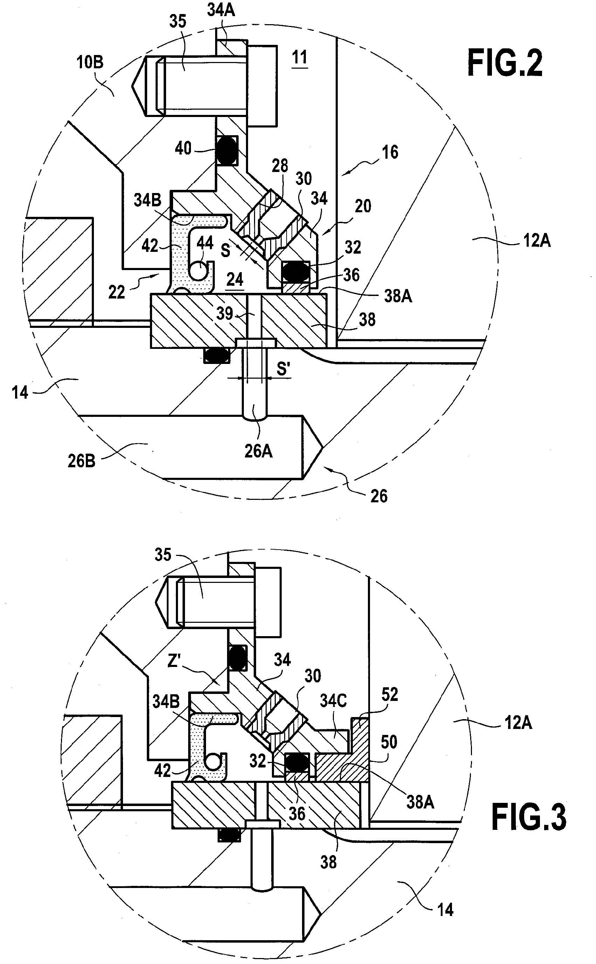

Comme on le voit mieux sur la figure 2, le dispositif d'étanchéité 16 comprend un premier élément d'étanchéité 20 et un deuxième élément d'étanchéité 22 successivement disposés sur l'arbre 14. Une chambre de décharge 24 est ménagée entre les deux éléments d'étanchéité. Le premier élément d'étanchéité 20 est plus proche de l'appareil hydraulique 12 que le deuxième. La chambre de décharge 24 est reliée à un drain 26. En particulier, ce drain peut être ménagé dans ou sur l'arbre 14, notamment lorsque ce dernier est un élément de stator. Dans l'exemple représenté, il comprend un tronçon de conduit radial 26A et un tronçon de conduit axial 26B, le tronçon 26A établissant la liaison entre la chambre de décharge 24 et le tronçon axial 26B. D'autres modes de réalisation du drain sont envisageables, par exemple du type de ceux qui sont décrits dans le document FR 2 967 228. On comprend que le dispositif d'étanchéité 16 sert à isoler de manière étanche l'espace intérieur du carter 11 par rapport au reste du système hydraulique, en particulier l'espace 13 dans lequel sont logés les paliers 18A et 18B.

On voit, en particulier sur la figure 2, que le système présente un conduit de communication 28 établissant une liaison fluidique entre l'espace intérieur 11 du carter et la chambre de décharge 24. Un gicleur calibré 30 est disposé dans le conduit 28.

On voit que la section S du gicleur calibré est inférieure à la section de passage S' du drain 26. En particulier, la section S' est supérieure d'au moins 30% à la section S.

Selon un mode de réalisation, on souhaite faire en sorte que la pression dans la chambre de décharge soit inférieure à 3 bar, de préférence inférieure à 1 bar, par exemple de l'ordre de 0,5 bar, alors que les pics de pression dans le carter peuvent atteindre environ 10 bar voire davantage et que la pression normale dans le carter, en dehors des pics de pression, peut être de l'ordre de 1,5 bar. La différence de section d'au moins 30% permet d'obtenir la différence de pression souhaitée entre l'espace intérieur du carter et la chambre de décharge.

Le premier élément d'étanchéité 20 comprend un joint annulaire d'étanchéité 32 et un support de joint 34 qui est fixé au carter 10. Dans l'exemple particulier représenté, le premier élément d'étanchéité comprend en outre un patin annulaire 36. Plus précisément, le joint annulaire 32 et le patin annulaire 36 sont tous deux disposés dans une gorge annulaire du support 34, de telle sorte que le patin fasse légèrement saillie en dehors de cette gorge. C'est le patin 36 qui établit une surface de contact avec l'arbre 14 ou, comme dans l'exemple représenté, avec une bague de frottement 38 qui est montée serrée sur cet arbre. Le patin coopère en effet avec la piste externe 38A de cette bague, formée sur la périphérie axiale externe de cette dernière.

La bague de frottement 38 est une pièce en matériau très dur, de faible rugosité, et d'usinage très soigné qui est montée sur l'arbre suivant une manière connue, pour réaliser une piste de frottement ayant un état de surface adéquat pour les éléments de contact du premier et du deuxième élément d'étanchéité. Une bague de frottement rapportée présente également l'avantage de pouvoir être changée en cas d'usure pour permettre la maintenance du système.

On peut bien entendu utiliser un montage sans une telle bague de frottement 38, en réalisant une surface de frottement adaptée directement sur l'arbre 14. Pour sa fixation avec le carter 10 ou, plus précisément, avec la partie 10B du carter, le support de joint présente en l'espèce une collerette radiale 34A, les moyens de fixation étant en l'espèce des vis 35 traversant des passages de cette collerette et vissées dans les alésages de la partie 10B du carter. Dans l'exemple représenté, un joint d'étanchéité additionnel 40 établit une étanchéité entre les surfaces en contact de la collerette 34A et de la partie 10B du carter.

Le deuxième élément d'étanchéité 22 comprend quant à lui un joint à lèvre 42 avec un jonc de renfort 44 qui le maintient plaqué sur la piste externe de la bague de frottement 38.

On relève que le support de joint 34 présente une surface de portée 34B pour le deuxième élément d'étanchéité. En l'espèce, cette surface de portée axiale est formée par la face interne 34B d'une extension axiale du support 34, avec laquelle coopère la périphérie axiale externe du joint 42.

On voit que le gicleur calibré 30 est disposé dans un perçage du support de joint. Ainsi, le conduit de communication 28 est en l'espèce formé par ce perçage. On voit également que ce perçage est incliné par rapport à la direction axiale A de l'arbre 14. Plus précisément, l'inclinaison du perçage 28 est faite de telle sorte que son extrémité située du côté de la chambre de décharge 24 est plus proche de l'arbre 14 que son extrémité située du côté de l'espace intérieur 11 du carter. Dans l'exemple représenté, le perçage 28 est rectiligne, et son inclinaison par rapport à la direction axiale A est de l'ordre de 45°. Le perçage 28 est alésé, le gicleur 30 étant vissé dans son filetage. Le gicleur peut également être monté à force, selon un montage serré ou être directement réalisé par un perçage du support de joint, de préférence un perçage étagé, dont la petite section est ainsi réalisée avec une faible tolérance.

On a évoqué précédemment la bague de frottement 38 avec laquelle coopère au moins l'un des éléments d'étanchéité 20 et 22. En l'espèce, les deux éléments d'étanchéité coopèrent avec la piste axiale externe 38A de cette bague, qui délimite donc la chambre de décharge 24 du côté axial interne de cette dernière. On voit par ailleurs que cette bague 38 présente un perçage 39 qui forme une partie du drain 26. En l'espèce, c'est la section de ce perçage 39 qui définit la section S' du drain, le perçage 39 formant une partie du tronçon radial 26A du drain précédemment évoqué.

On voit encore sur la figure 1 que l'arbre 14 présente un conduit 46 qui débouche dans l'espace intérieur du carter. Ce conduit communique avec un espace 47 ménagé entre l'arbre 14 et la partie interne du distributeur 12C. Cet espace 47 communique d'une manière connue en soi avec l'espace intérieur 11 du carter soit par un perçage à travers la partie interne du distributeur 12C, soit par un jeu ménagé sur une partie des cannelures entre l'arbre 14 et le bloc-cylindres 12A. En l'espèce, le conduit 46 est un conduit axial d'amenée de fluide vers l'espace intérieur du carter, pour mettre ce dernier en pression, par exemple pour opérer un décrabotage des pistons du bloc-cylindres 12A. Par ailleurs, l'arbre présente un conduit axial d'évacuation formant la partie 26B du drain 26. Comme on l'a indiqué précédemment, grâce à l'invention, le drain 26 sert non seulement à éviter les augmentations de pression dans la chambre 24, mais également à servir d'évacuation de fluide pour le balayage de l'appareil hydraulique. Ainsi, pour la connexion fluidique avec l'espace intérieur du carter, l'arbre présente seulement les deux conduits 46 et 26.

Pour obtenir un balayage du carter, il est donc possible d'appliquer une pression de fluide modérée par le conduit 46, qui créera un débit de balayage réglé par le gicleur 30 vers le drain 26.

De même, d'une manière connue en soi, l'utilisateur peut créer une augmentation de pression limitée temporaire s'il le souhaite, au moment de la sortie des pistons pour un crabotage, en drainant le carter à travers le gicleur 30. La figure 3 montre une variante de réalisation, selon laquelle une bague de centrage 50 est utilisée pour le montage du support de joint 34. Sur cette figure, les éléments communs aux figures 1 et 2 sont désignés par les mêmes références.

En l'espèce, la bague de centrage 50 coopère d'une part avec une surface de portée axiale du support de joint 34. D'autre part, la bague 50 est calée par rapport à la surface axiale de l'arbre 14. Plus précisément, dans la variante de la figure 3, le support de joint 34 comporte une extension, dirigée vers l'appareil hydraulique, prenant la forme d'une jupe axiale 34C, de telle sorte qu'un espace est ménagé entre la face interne de cette jupe et la piste de frottement 38A de la bague 38. La bague de centrage est insérée dans cet espace, et coopère donc avec la face interne de la jupe 34C et la piste de frottement 38A. Par ailleurs, en l'espèce, la bague de centrage présente une portion de flasque 52 qui facilite sa préhension. Une fois le montage du support de joint ainsi réalisé, la bague de centrage 50 peut être ôtée.

Si la bague de frottement 38 était absente, la bague de centrage 50 pourrait directement coopérer avec la périphérie externe de l'arbre faisant office de surface axiale de centrage.

D'autres réalisations de la bague de centrage sont envisageables, par exemple celles décrites dans la demande de brevet FR 2 967 201.

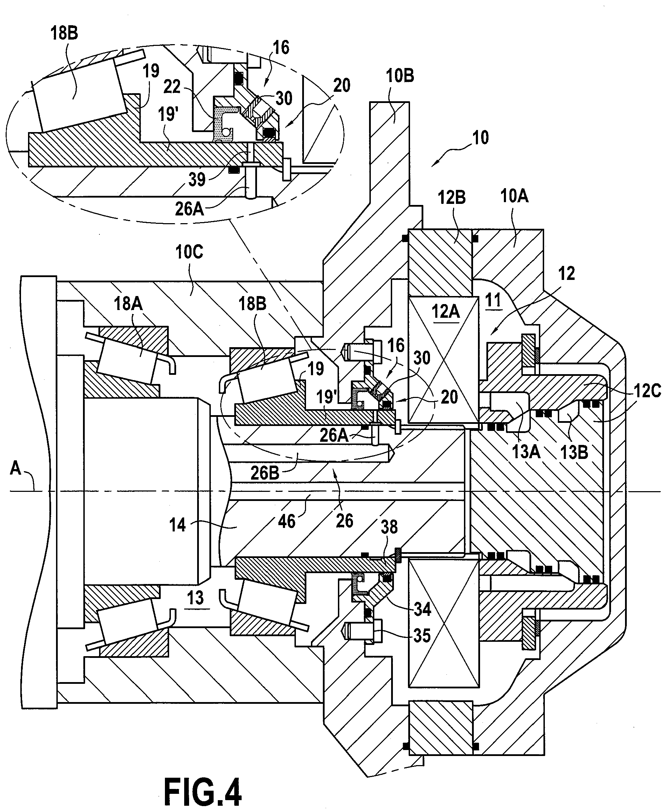

Dans les exemples représentés sur les figures 1 à 3, les éléments d'étanchéité coopèrent avec la bague de frottement 38, tandis que les paliers ont leurs propres bagues de support. Dans la variante de la figure 4, la bague de support du palier 18B, le plus proche des éléments d'étanchéité 20 et 22, sert également de bague de frottement, comme on le voit mieux sur la zone agrandie. En effet, cette bague de support 19 présente une extension axiale 19' faisant office de bague de frottement. On relève notamment qu'au moins le deuxième élément d'étanchéité 22 coopère avec la surface de cette extension 19' qui forme une piste de frottement. En l'espèce, des deux éléments d'étanchéité 20 et 22 coopèrent avec cette piste de frottement. L'extension 19' présente également un perçage 39 qui forme une partie du drain.

Sur les figures qui viennent d'être décrites, l'arbre 14 forme une partie de noyau pour le système hydraulique, et fait de préférence office de stator alors que le carter 10 est tournant. Comme indiqué précédemment, l'arbre est par exemple une fusée d'une roue.

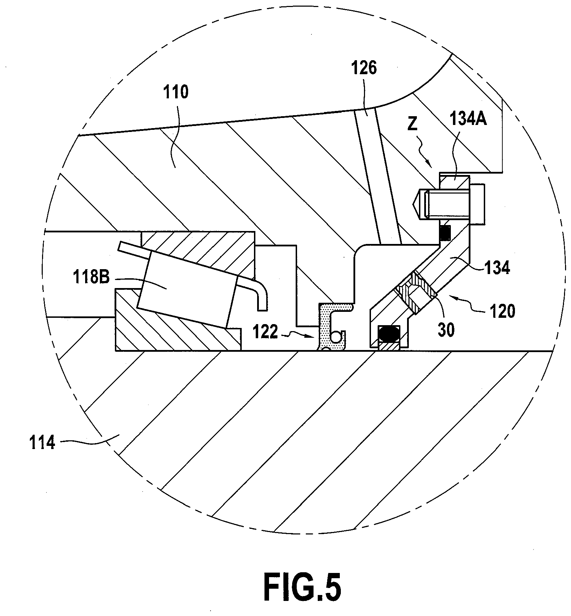

Cependant, l'invention s'applique également au cas où l'arbre est une partie de rotor, tandis que le carter est une partie de stator. C'est ce que montre la figure 5 sur laquelle seule une partie du système est représentée. Sur cette figure, on voit le carter 110 disposé autour de l'arbre 114, ainsi qu'un palier 118B. Un autre palier peut être situé à gauche du palier 118B, c'est-à-dire du côté opposé au carter. Si l'appareil hydraulique est de type moteur ou pompe hydraulique, un bloc-cylindres peut être prévu dans le carter 110, sur la droite de la figure. Deux éléments d'étanchéité 120 et 122, analogues à ceux qui viennent d'être décrits, séparent le palier 118B de l'espace intérieur du carter 111. Le support de joint 134 qui fait partie du premier élément d'étanchéité est équipé d'un gicleur 30 comme dans les variantes précédemment décrites. Le support 134 coopère d'une part avec l'arbre 114 via un arrangement à joint annulaire et patin, et d'autre part avec le carter 110, via un joint additionnel. Une partie de bride 134A du support de joint 134 permet de le fixer au carter 110. Pour drainer la chambre de décharge 124 ménagée entre les deux éléments d'étanchéité 120 et 122, un drain 126 est ménagé dans le carter 110.

On relève également sur la figure 5 que le gicleur 30 est orienté de telle sorte qu'il ne dirige pas son jet de sortie vers le deuxième élément d'étanchéité 122, ce qui permet d'éviter les perturbations sur cet élément d'étanchéité, qui pourraient défavoriser l'étanchéité. Une orientation du même type est bien entendu compatible avec les variantes des figures 1 à 4, par exemple en inclinant le gicleur de manière à le placer presque perpendiculairement à l'axe de l'arbre 14.

Dans les variantes représentées, le support de joint est fixé au carter par des vis. On peut bien entendu envisager d'autres modes de fixation. On peut d'ailleurs, si la portée de contact entre le support de joint et le carter est suffisante dans la zone Z indiquée sur la figure 5, prévoir un montage à force par engagement à force entre la surface cylindrique externe du support de joint et la portée formée sur le carter. De la même manière, pour la variante de la figure 3, un engagement à force dans la zone Z' de portée cylindrique entre le support de joint et le carter est également envisageable, auquel cas on peut s'abstenir des vis de fixation 35.

Si on a recours à un tel montage à force, l'étanchéité entre le support de joint et le carter peut être directement assurée par le contact des portées cylindriques évoquées ci-dessus, auquel cas on peut s'abstenir du joint additionnel 40.

## Revendications

1. Système hydraulique comprenant un carter (10 ; 110) dans lequel est disposé un appareil hydraulique (12), un arbre (14 ; 114) engagé dans le carter et un dispositif d'étanchéité (16) entre l'arbre et le carter, le dispositif d'étanchéité comprenant un premier et un deuxième élément d'étanchéité (20, 22 ; 120, 122) successivement disposés sur l'arbre en ménageant entre eux une chambre de décharge (24 ; 124) reliée à un drain (26 ; 126), le premier élément d'étanchéité étant situé entre la chambre de décharge (24 ; 124) et l'espace intérieur (11 ; 111) du carter,
**caractérisé en ce qu'**il présente, entre la chambre de décharge (24 ; 124) et l'espace intérieur (11) du carter, un conduit de communication (28) dans lequel est disposé un gicleur calibré (30).

2. Système selon la revendication 1, **caractérisé en ce que** le drain (26 ; 126) présente une section de passage (S') supérieure à la section (S) du gicleur calibré (30).

3. Système selon la revendication 2, **caractérisé en ce que** la section de passage (S') est supérieure d'au moins 30 % à la section (S) du gicleur calibré (30).

4. Système selon l'une quelconque des revendications 1 à 3, **caractérisé en ce que** le premier élément d'étanchéité (20 ; 120) comprend un joint d'étanchéité (32) et un support de joint (34 ; 134) fixé au carter (10 ; 110).

5. Système selon la revendication 4, **caractérisé en ce que** le gicleur calibré (30) est disposé dans un perçage (28) du support de joint (34 ; 134).

6. Système selon la revendication 5, **caractérisé en ce que** le perçage est incliné par rapport à la direction axiale de l'arbre (14 ; 114).

7. Système selon la revendication 6, **caractérisé en ce que** le perçage (28) est incliné de telle sorte que son extrémité située du côté de la chambre de décharge (24) est plus proche de l'arbre (14) que son extrémité située du côté de l'espace intérieur (11) du carter.

8. Système selon l'une quelconque des revendications 4 à 7, **caractérisé en ce que** le support de joint (34) présente une surface de portée (34B) pour le deuxième élément d'étanchéité (22).

9. Système selon l'une quelconque des revendications 1 à 8, **caractérisé en ce qu'**il comporte en outre une bague de frottement (38 ; 19'), montée serrée sur l'arbre (14) et présentant une piste externe (38A) avec laquelle coopère au moins l'un des éléments d'étanchéité (20, 22), de préférence le premier élément d'étanchéité, et **en ce que** la bague de frottement (38) présente un perçage (39) qui forme une partie du drain (26).

10. Système selon la revendication 9, **caractérisé en ce que** la bague de frottement (19') forme une bague de support (19) pour un palier (18B).

11. Système selon l'une quelconque des revendications 1 à 10, **caractérisé en ce que** l'arbre présente seulement deux conduits en connexion fluidique avec l'espace intérieur du carter, à savoir un conduit axial d'amenée de fluide (46) vers l'espace intérieur du carter et un conduit axial d'évacuation (26B) qui forme une partie du drain (26).

12. Système selon l'une quelconque des revendications 1 à 11, **caractérisé en ce que** l'appareil hydraulique comprend un bloc-cylindres (12A), une came (12B) et un distributeur de fluide (12C).

13. Système selon l'une quelconque des revendications 1 à 12, **caractérisé en ce que** le gicleur (30) est orienté de manière à ne pas diriger son jet de sortie dans la chambre de décharge (24, 124) vers le deuxième élément d'étanchéité (22, 122).

## Patentansprüche

1. Hydraulisches System, umfassend ein Gehäuse (10; 110), in dem eine hydraulische Vorrichtung (12) angeordnet ist, eine Welle (14; 114), die in das Gehäuse eingreift, und eine Abdichtvorrichtung (16) zwischen der Welle und dem Gehäuse, wobei die Abdichtvorrichtung ein erstes und ein zweites Dichtelement (20, 22; 120, 122) aufweist, die nacheinander auf der Welle angeordnet sind und zwischen sich eine Entladungskammer (24; 124) ausbilden, die mit einem Abfluss (26; 126) verbunden ist, wobei das erste Dichtelement zwischen der Entladekammer (24; 124) und dem Innenraum (11; 111) des Gehäuses angeordnet ist,
**dadurch gekennzeichnet, dass** es zwischen der Entladekammer (24; 124) und dem Innenraum (11) des Gehäuses einen Kommunikationskanal (28) aufweist, in dem eine kalibrierte Düse (30) angeordnet ist.

2. System gemäß Anspruch 1, **dadurch gekennzeichnet, dass** der Abfluss (26; 126) einen Durchgangsquerschnitt (S') aufweist, der größer ist als der Querschnitt (S) der kalibrierten Düse (30).

3. System gemäß Anspruch 2, **dadurch gekennzeichnet, dass** der Durchgangsquerschnitt (S') mindestens 30 % größer ist als der Querschnitt (S) der kalibrierten Düse (30).

4. System gemäß einem der Ansprüche 1 bis 3, **dadurch gekennzeichnet, dass** das erste Dichtelement (20; 120) eine Abdichtung (32) und einen Dichtungsträger (34; 134) umfasst, der an dem Gehäuse (10; 110) befestigt ist.

5. System gemäß Anspruch 4, **dadurch gekennzeichnet, dass** die kalibrierte Düse (30) in einer Bohrung (28) des Dichtungsträgers (34; 134) angeordnet ist.

6. System gemäß Anspruch 5, **dadurch gekennzeichnet, dass** die Bohrung in Bezug auf die axiale Richtung der Welle (14; 114) geneigt ist.

7. System gemäß Anspruch 6, **dadurch gekennzeichnet, dass** die Bohrung (28) so geneigt ist, dass ihr eines Ende, das sich auf der Seite der Entladekammer (24) befindet, näher an der Welle (14) liegt als ihr anderes Ende, das sich auf der Seite des Innenraums (11) des Gehäuses befindet.

8. System gemäß einem der Ansprüche 4 bis 7, **dadurch gekennzeichnet, dass** der Dichtungsträger (34) eine Auflagefläche (34B) für das zweite Dichtelement (22) aufweist.

9. System gemäß einem der Ansprüche 1 bis 8, **dadurch gekennzeichnet, dass** es ferner einen Reibring (38; 19') umfasst, der fest auf der Welle (14) montiert ist und eine Außenbahn (38A) aufweist, mit der mindestens eines der Dichtelemente (20, 22), vorzugsweise das erste Dichtelement, zusammenwirkt, und dass der Reibring (38) eine Bohrung (39) aufweist, die einen Teil des Abflusses (26) bildet.

10. System gemäß Anspruch 9, **dadurch gekennzeichnet, dass** der Reibring (19') einen Stützring (19) für ein Lager (18B) bildet.

11. System gemäß einem der Ansprüche 1 bis 10, **dadurch gekennzeichnet, dass** die Welle nur zwei Kanäle in Fluidverbindung mit dem Innenraum des Gehäuses aufweist, nämlich einen axialen Fluidzuführungskanal (46) zum Innenraum des Gehäuses und einen axialen Ablaufkanal (26B), der Teil des Abflusses (26) ist.

12. System gemäß einem der Ansprüche 1 bis 11, **dadurch gekennzeichnet, dass** die hydraulische Vorrichtung einen Zylinderblock (12A), einen Nocken (12B) und einen Fluidverteiler (12C) umfasst.

13. System gemäß einem der Ansprüche 1 bis 12, **dadurch gekennzeichnet, dass** die Düse (30) so ausgerichtet ist, dass ihr Auslassstrahl in der Entladekammer (24, 124) nicht auf das zweite Dichtelement (22, 122) gerichtet ist.

## Claims

1. A hydraulic system comprising a casing (10; 110) in which there are disposed a hydraulic apparatus (12), a shaft (14; 114) engaged in the casing, and a sealing device (16) between the shaft and the casing, the sealing device comprising first and second sealing elements (20, 22; 120, 122) disposed in succession on the shaft while forming between them a discharge chamber (24; 124) connected to a drain (26; 126), the first sealing element being situated between the discharge chamber (24; 124) and the internal space (11, 111) of the casing;
said hydraulic system being **characterized in that**, between the discharge chamber (24; 124) and the internal space (11) of the casing, it has a communication duct (28) in which a calibrated jet nozzle (30) is disposed.

2. A system according to claim 1, **characterized in that** the drain (26, 126) has a through cross-sectional area (S') greater than the cross-sectional area (S) of the calibrated jet nozzle (30).

3. A system according to claim 2, **characterized in that** the through cross-sectional area (S') is at least 30% greater than the cross-sectional area (S) of the calibrated jet nozzle (30).

4. A system according to any one of claims 1 to 3, **characterized in that** the first sealing element (20; 120) comprises a sealing gasket (32) and a gasket support (34; 134) fastened to the casing (10; 110).

5. A system according to claim 4, **characterized in that** the calibrated jet nozzle (30) is disposed in a hole (28) bored through the gasket support (34; 134).

6. A system according to claim 5, **characterized in that** the hole is inclined relative to the axial direction of the shaft (14; 114).

7. A system according to claim 6, **characterized in that** the hole (28) is inclined in such manner that its end situated on the discharge chamber (24) side is closer to the shaft (14) than its end situated on the internal space (11) of the casing side.

8. A system according to any one of claims 4 to 7, **characterized in that** the gasket support (34) has a bearing surface (34B) for the second sealing element (22) .

9. A system according to any one of claims 1 to 8, **characterized in that** it further comprises a friction ring (38; 19') mounted in tight-fitting manner on the shaft (14) and having an external track (38A) that cooperates with at least one of the sealing elements (20, 22), and preferably with the first sealing element, and **in that** the friction ring (38) is provided with a hole (39) that forms a portion of the drain (26).

10. A system according to claim 9, **characterized in that** the friction ring (19') forms a support ring (19) for a bearing (18B).

11. A system according to any one of claims 1 to 10, **characterized in that** the shaft has only two ducts in fluid connection with the internal space of the casing, namely a fluid feed axial duct (46) for feeding fluid to the internal space of the casing, and an exhaust axial duct (26B) that forms a portion of the drain (26).

12. A system according to any one of claims 1 to 11, **characterized in that** the hydraulic apparatus comprises a cylinder block (12A), a cam (12B) and a fluid distributor (12C).

13. A system according to any one of claims 1 to 12, **characterized in that** the jet nozzle (30) points in such manner as not to direct its output jet inside the discharge chamber (24, 124) towards the second sealing element (22, 122).
